# EUROPÄISCHE PATENTSCHRIFT

(11) **EP 1 925 512 B1**
(45) Veröffentlichungstag und Bekanntmachung des Hinweises auf die Patenterteilung: **21.07.2010**
(21) Anmeldenummer: 07021205.5
(22) Anmeldetag: 30.10.2007
(51) Int. Cl.: B60S 5/06

(54) **Flurförderzeug mit seitlich entnehmbarer Batterie**
Industrial truck with battery which can be removed laterally
Chariot de manutention doté d'une batterie amovible latéralement

(30) Priorität: 23.11.2006 DE 102006055361
(43) Veröffentlichungstag der Anmeldung: 28.05.2008
(73) Patentinhaber: STILL GmbH, 22113 Hamburg (DE)
(72) Erfinder: Strugg, Gerald, 22761 Hamburg (DE)
(74) Vertreter: Geirhos, Johann

(56) Entgegenhaltungen:
- EP-A- 1 396 401
- EP-A- 1 661 847
- DE-A1- 10 347 065

## Beschreibung

Die Erfindung betrifft ein Flurförderzeug mit einem Fahrzeugrahmen, der eine seitliche Entnahmeöffnung für einen Batterieblock aufweist, und einer Vorrichtung zur seitlichen Batterieentnahme, umfassend mindestens eine Batterieaufnahmevorrichtung, eine hydraulische Antriebsvorrichtung und eine Führung, wobei die Batterieaufnahmevorrichtung mittels der hydraulischen Antriebsvorrichtung und der Führung zwischen einer Betriebsposition, in der sich die Batterieaufnahmevorrichtung innerhalb des Fahrzeugrahmens befindet, und einer Batteriewechselposition, in der sich die Aufnahmevorrichtung außerhalb des Fahrzeugrahmens befindet, bewegbar ist

Flurförderzeuge, insbesondere Gegengewichtsgabelstapler, sind vor allem in jüngerer Zeit häufig mit einer seitlichen Batterieentnahmeöffnung ausgeführt. Oft ist es bei den Betreibern von Gabelstaplern üblich, die Batterieblöcke oder eine andere austauschbare Energieversorgungseinrichtung, beispielsweise ein Brennstoffzellenpowerpack, mittels eines Krans zu transportieren. Um dies bei Gabelstaplern mit einer seitlichen Batterieentnahmeöffnung zu ermöglichen, muss der Batterieblock zunächst vollständig aus dem Batteriefach heraus bewegt werden. Erst dann kann der Batterieblock an den Kran angehängt und angehoben werden. Analog hierzu kann während des Einsetzens in das Batteriefach der Batterieblock mittels des Krans nur neben die Entnahmeöffnung bewegt werden. Um den Batterieblock dann in horizontaler Richtung durch die Entnahmeöffnung in das Batteriefach zu bewegen, bedarf es einer Hilfsvorrichtung.

Hilfsvorrichtungen, die es erlauben, den Batterieblock ohne Zuhilfenahme eines Gabelhubwagens in horizontaler Richtung in das Batteriefach hinein oder aus dem Batteriefach heraus zu bewegen, sind im Stand der Technik bereits bekannt. In der DE 102 40 854 A1 ist beispielsweise beschrieben, unten im Batteriefach eine ausziehbare Rollenbahn anzuordnen. Nach dem Ausziehen der Rollenbahn kann der Batterieblock auf der Rollenbahn vollständig aus dem Batteriefach heraus gerollt werden.

Eine weitere Möglichkeit besteht darin, den Batterieblock auf einer Aufnahmevorrichtung zu platzieren und mitsamt dieser Vorrichtung beispielsweise entlang einer linearen Führung in das Fahrzeug hinein- bzw. herauszubewegen. Diese Bewegung erfordert aufgrund des erheblichen Gewichts des Batterieblocks großen Kraftaufwand, weshalb hierfür zumeist eigenständige Antriebsvorrichtungen vorgesehen sind.

Sehr gut geeignet als Antriebsvorrichtung für die zumeist hauptsächlich lineare Bewegung des Batterieausschubs sind Hydraulikzylinder. Diese können an den in Flurförderzeugen zumeist vorhandenen Hydraulikkreis angeschlossen und von einem Bedienplatz des Flurförderzeugs angesteuert werden. Um sowohl das Einfahren als auch das Ausfahren der Batterie zu ermöglichen, müssen die Zylinder doppeltwirkend sein.

Aus der DE 103 47 065 A1 ist ein gattungsgemäßes Flurförderzeug bekannt, bei dem zum seitlichen Batteriewechsel ein im Rahmenabschnitt des Flurförderzeugs querverschiebbar angeordneter Schubschlitten vorgesehen ist, der mittels eines doppeltwirkenden Hydraulikzylinders querbewegbar ist. Der Hydraulikzylinder ist mittels eines Umschaltventils an einen bereits im Flurförderzeug vorhandenen hydraulischen Kreislauf anschließbar. Mit einer derartigen Vorrichtung kann jedoch ein auf dem Schubschlitten befindlicher Batterieblock nicht vollständig außerhalb der Fahrzeugkontur verschoben werden.

Wird die Aufnahmevorrichtung besonders weit seitlich ausgefahren, d.h. so weit dass diese und die darauf gelagerte Batterie sich praktisch vollständig außerhalb der Fahrzeugkontur befinden, reicht der Ausschub eines einfachen Hydraulikzylinders, der maximal der annähernden Länge des Zylinders entsprechen kann, meist nicht aus. Für diesen Fall kann beispielsweise ein Teleskopzylinder oder eine Kombination aus mehreren Zylindern Verwendung finden.

Doppeltwirkende Teleskopzylinder sind sehr aufwändig aufgebaut und mindestens ein Hydraulikanschluss ist relativ zum Fahrzeugrahmen beweglich angeordnet und muss über interne Leitungen oder Schlauchverbindungen angeschlossen werden.

Bei einem Aufbau aus zwei oder mehr doppeltwirkenden Zylindern ist mindestens ein Zylinder nicht mehr ortsfest in Relation zum Fahrzeugrahmen und muss daher ebenfalls aufwändig und fehleranfällig, beispielsweise über einen Schlauch, an die Hydraulikversorgung des Fahrzeugs angeschlossen werden.

Beim Ausfahren der Batterie darf diese zudem nicht elektrisch vom Fahrzeug getrennt werden, da dann auch für die fahrzeuginterne Hydraulikanlage keine Energie mehr zur Verfügung steht. Daher sind sehr lange Batteriekabel vonnöten, die unnötig Platz benötigen und beschädigungsanfällig sind.

Der vorliegenden Erfindung liegt die Aufgabe zugrunde, ein Flurförderzeug gemäß dem Oberbegriff von Anspruch 1 zur Verfügung zu stellen, das eine einfach aufgebaute und zuverlässige Vorrichtung zur seitlichen Batterieentnahme aufweist.

Diese Aufgabe wird erfindungsgemäß dadurch gelöst, dass die Führung als teleskopische Führung ausgebildet ist, die ein mit dem Fahrzeugrahmen verbundenes Grundelement, ein an dem Grundelement verschiebbar geführtes erstes Teleskopelement und ein an dem ersten Teleskopelement verschiebbar geführtes zweites Teleskopelement umfasst, wobei die Aufnahmeeinrichtung an dem zweiten Teleskopelement befestigt ist und wobei die hydraulische Antriebsvorrichtung mindestens einen Hydraulikzylinder, vorzugsweise zwei gegenläufig angeordnete doppeltwirkenden Hydraulikzylinder, umfasst, die an dem ersten Teleskopelement angeordnet sind, und annähernd ortsfest zu der relativ zum Fahrzeugrahmen beweglichen hydraulischen Antriebsvorrichtung mindestens eine Vorrichtung zu Bereitstellung hydraulischer Energie für die hydraulische Antriebsvorrichtung an dem ersten Teleskopelement angeordnet ist.

Die teleskopische Ausführung der Führung mit zwei Teleskopelementen gewährleistet die erforderliche Ausfahrlänge der Führung, um den Batterieblock zwischen einer Position, in der er sich vollständig innerhalb des Flurförderzeugs befindet und einer weiteren Position, in der er sich vollständig außerhalb des Flurförderzeugs befindet, bewegen zu können. Das Grundelement, das erste Teleskopelement und das zweite Teleskopelement können jeweils ein- oder mehrteilig ausgeführt sein, wobei insbesondere mehrere Teile, die in Längsrichtung des Flurförderzeugs voneinander beabstandet sind und in der Regel immer synchron bewegt werden, als zusammengehörend angesehen werden. Zwei gegenläufig angeordnete doppeltwirkende Hydraulikzylinder sind besonders gut geeignet um lineare Bewegungen, wie beispielsweise einen seitlichen Batterieausschub, anzutreiben. Die zwei gegenläufig angeordneten doppeltwirkenden Hydraulikzylinder sind auf dem ersten Teleskopelement angeordnet. Beim Ausschub der Batterie wird sowohl das zweite Teleskopelement als auch das Grundelement relativ zu dem ersten Teleskopelement bewegt. Die Kolben der zwei gegenläufig angeordneten doppeltwirkenden Hydraulikzylinder bewegen somit in der einen Richtung das erste Teleskopelement relativ zum Grundelement und in der gegenläufigen Richtung das zweite Teleskopelement relativ zum ersten Teleskopelement, während der Hydraulikzylinder selbst mit dem ersten Teleskopelement verbunden ist und sich daran abstützt. Es ergibt sich somit eine platzsparende und stabile Anordnung. Die Vorrichtung zur Bereitstellung hydraulischer Energie ist auf dem ersten Teleskopelement angeordnet. Dies ist eine besonders einfache Anordnung, bei der die Vorrichtung zur Bereitstellung hydraulischer Energie ortsfest zu den Hydraulikzylindern angeordnet werden kann und mit diesen über kurze, feststehende Leitungen verbunden ist. Vorrichtungen zur Bereitstellung hydraulischer Energie können beispielsweise Pumpen, Druckspeicher oder Druckgaskartuschen sein. Indem hydraulische Energie annähernd ortsfest in Relation zu der hydraulischen Antriebsvorrichtung zur Verfügung gestellt wird, entfallen flexible, längen- oder lageveränderliche Elemente wie Schläuche. Die Vorrichtung ist einfacher zu fertigen und weniger fehleranfällig.

Es ist besonders vorteilhaft, wenn die Vorrichtung zur Bereitstellung hydraulischer Energie mindestens eine Hydraulikpumpe umfasst. Hydraulikpumpen sind besonders geeignet, um hydraulische Energie mit wenig Aufwand in ausreichender Menge bereitzustellen.

Es ist weiterhin von Vorteil, wenn die Vorrichtung zur Bereitstellung hydraulischer Energie mindestens einen Elektromotor umfasst. Elektromotoren sind als Antriebe für Hydraulikpumpen gut geeignet, sind im Vergleich zu einem Handantrieb für die Bedienperson einfacher zu handhaben und können sehr gut in automatisierten Prozessen verwendet werden.

Es ist zweckmäßig, wenn die Vorrichtung zur Bereitstellung hydraulischer Energie mindestens einen Hydrauliktank umfasst. Tanks dienen der Speicherung der Hydraulikflüssigkeit.

Es ist von besonderem Vorteil, wenn Elektromotor und Hydraulikpumpe als Baueinheit ausgebildet sind. Eine derartige Anordnung spart Einbauraum.

Ebenfalls vorteilhaft ist, wenn Hydrauliktank und Hydraulikpumpe als Baueinheit ausgebildet sind. Dadurch wird sowohl Einbauraum gespart als auch der Aufwand für Hydraulikleitungen zwischen Tank und Pumpe reduziert. Dadurch sinkt die Fehleranfälligkeit.

Weiterhin ist es von ganz besonderem Vorteil, wenn Elektromotor, Hydrauliktank und Hydraulikpumpe als Baueinheit ausgebildet sind. Dadurch wird eine sehr kompakte Bauweise erzielt und bei Defekten durch einfachen Austausch der kompletten Baugruppe das Lösen zahlreicher Verbindungen eingespart

Weiterhin ist es zweckmäßig, wenn die Führung als teleskopische Gleitführung ausgebildet ist, wobei ein Grundelement der Führung starr mit dem Fahrzeugrahmen verbunden ist, ein erstes Teleskopelement an dem Grundelement bewegbar geführt ist und ein zweites Teleskopelement an dem ersten Teleskopelement bewegbar geführt ist und die Aufnahmevorrichtung an dem zweiten Teleskopelement befestigt ist.

Weiterhin ist es zweckmäßig, wenn die gegenläufig angeordneten doppeltwirkenden Hydraulikzylinder in einem gemeinsamen Gehäuse angeordnet sind. Dadurch wird ein platzsparender Aufbau erzielt und die Angriffspunkte der Zylinderstangen liegen senkrecht zur Zylinderachse betrachtet nahe beieinander, wodurch Torsionsspannungen in der Anordnung minimiert werden.

Weitere Vorteile und Einzelheiten der Erfindung werden anhand des in den schematischen Figuren dargestellten Ausführungsbeispiels näher erläutert. Dabei zeigt
- Figur 1: einen Gabelstapler als Beispiel eines erfindungsgemäßen Flurförderzeugs in Seitenansicht,
- Figur 2: die Führung für die Aufnahmevorrichtung von unten gesehen.

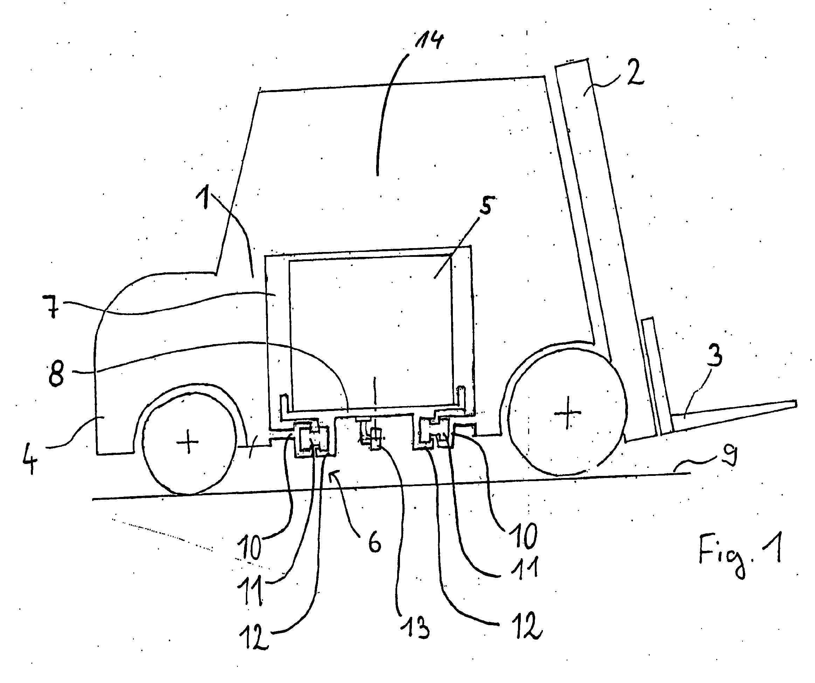

Figur 1 zeigt einen erfindungsgemäßen Gabelstapler in Seitenansicht. Das tragende Element des Gabelstaplers ist ein Fahrzeugrahmen 1. Vorne am Gabelstapler ist ein Hubgerüst 2 mit einem nach oben und unten bewegbaren Lastaufnahmemittel 3 befestigt. Am hinteren Ende des Gabelstaplers befindet sich ein Heckgewicht 4. Dazwischen befindet sich ein Fahrerplatz 14.

ln einem Freiraum des Fahrzeugrahmens befindet sich ein seitlich offenes Batteriefach 7, in dem ein Batterieblock 5 angeordnet ist. Der Batterieblock 5 steht auf einer Aufnahmevorrichtung 8 auf, welche erfindungsgemäß mittels einer teleskopischen Führung 6 in seitlicher Richtung aus dem Batteriefach 7 heraus bewegt werden kann. Die Führung 6 umfasst ein mit dem Fahrzeugrahmen 1 verbundenes Grundelement 10, in dem ein erstes Teleskopelement 11 verschiebbar geführt ist. Ein zweites Teleskopelement 12 wiederum ist in dem ersten Teleskopelement 11 verschiebbar geführt. Das zweite Teleskopelement 12 bildet mit der Aufnahmevorrichtung 8 ein gemeinsames Bauteil.

An der Aufnahmevorrichtung 8 - oder in einer anderen möglichen Ausführungsform direkt an dem zweiten Teleskopelement 12 - ist eine ausfahrbare Stütze 13 befestigt. Solange sich die Aufnahmevorrichtung 8 innerhalb des Fahrzeugrahmens 1 befindet, ist die Stütze 13 eingefahren und befindet sich innerhalb der Fahrzeugkontur. Sobald sich die Stütze 13 außerhalb des Fahrzeugrahmens 1 befindet, fährt sie automatisch aus und stützt die Gewichtskraft des Batterieblocks 5 direkt an der Fahrbahn 9 ab. Am unteren Ende der Stütze 13 befindet sich eine Rolle, die während der Ausfahrbewegung des zweiten Teleskopelements 12 auf der Fahrbahn 9 abrollt.

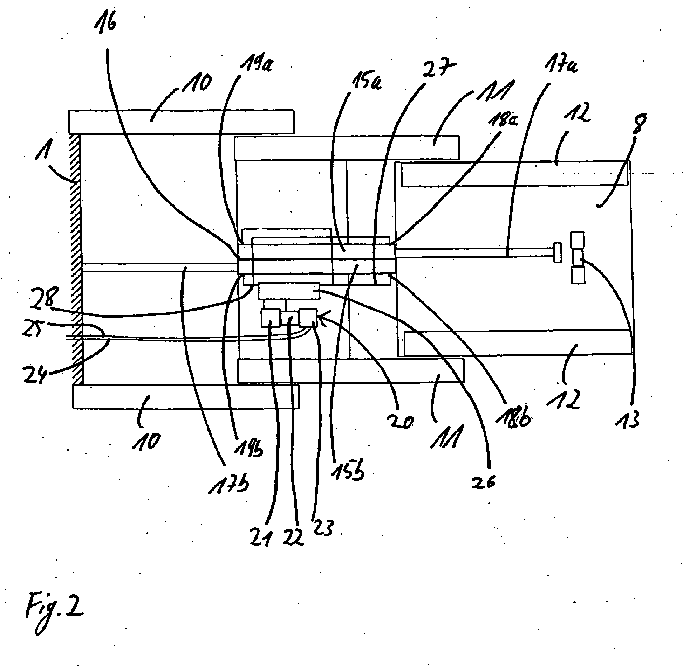

Figur 2 zeigt die Führung für die Aufnahmevorrichtung in teilweise ausgezogener Stellung. Das Grundelement 10, das nicht in seiner vollständigen Länge dargestellt ist, befindet sich am linken Ende der Darstellung. Das Grundelement 10 ist nicht bewegbar am Fahrzeugrahmen (Fig. 1, Pos. 1) befestigt. Das erste Teleskopelement 11 ist an dem Grundelement 10 und das zweite Teleskopelement 12 an dem ersten Teleskopelement 11 verschiebbar geführt.

Weiter zu erkennen ist die Stütze 13, die an dem zweiten Teleskopelement 12 befestigt ist und dieses an der Fahrbahn 9 abstützt. Die Stütze 13 trägt dann zumindest einen Teil der Gewichtskraft eines auf der Aufnahmevorrichtung 8 befindlichen Batterieblocks.

Fest mit dem ersten Teleskopelement 11 verbunden ist eine Kombination aus zwei gegenläufig angeordneten doppeltwirkenden Hydraulikzylindern 15a, 15b. Die Kombination der Hydraulikzylindern 15a, 15b in einem gemeinsamen Gehäuse 16 ermöglicht eine besonders platzsparende Anordnung. Zum Ausfahren der Aufnahmevorrichtung 8 werden die Kolben der beiden Hydraulikzylinder 15a, 15b in gegenläufiger Richtung bewegt und über die Zylinderstange 17b das erste Teleskopelement 11 vom Grundelement 10 weg sowie über die Zylinderstange 17a das zweite Teleskopelement 12 vom ersten Teleskopelement 11 weg nach außen bewegt. Dazu ist der der Entnahmeöffnung zugewandte Anschluss 18a des Hydraulikzylinder 15a dem der Entnahmeöffnung abgewandten Anschluss 19b des Hydraulikzylinders 15b parallel geschaltet. Ebenso ist der der Entnahmeöffnung abgewandte Anschluss 19a des Hydraulikzylinders15a dem der Entnahmeöffnung zugewandten Anschluss 18b des Hydraulikzylinder 15b parallel geschaltet.

Die gezeigte Anordnung ist von der Ausfahrreihenfolge der Hydraulikzylinder 15a, 15b unabhängig, so dass derjenige Hydraulikzylinder 15a, 15b, der den deutlich geringeren Widerstand erfährt, eine Aus- bzw. Einfahrbewegung durchführt. Wenn sich die Widerstandsverhältnisse umkehren, beispielsweise auch, wenn der sich bewegende Kolben am Endanschlag angelangt, startet der andere Kolben seine Bewegung. Durch die Koppelung der Hydraulikzylinder 15a, 15b an das erste Teleskopelement 11 ist es für die Ausfahrbewegung unerheblich, welcher der Hydraulikzylinder 15a, 15b zuerst ausfährt.

Die Versorgung der Hydraulikzylinder 15a, 15b mit Hydraulikflüssigkeit erfolgt über eine Baueinheit 20, die eine Kombination aus Hydrauliktank 21, Hydraulikpumpe 22 sowie einem Elektromotor 23 zum Antrieb der Hydraulikpumpe 22 umfasst. Die Baueinheit 20 und ein Ventilblock 26 werden über ein hier nicht dargestelltes Steuergerät, das im Flurförderzeug angeordnet ist, über eine Kabelverbindung 24 angesteuert. Der Ventilblock 26 steuert die Versorgung der Hydraulikzylinder 15a, 15b mit Hydraulikflüssigkeit. Die Energieversorgung der Baueinheit 20 erfolgt ebenfalls über Kabel 25 vom Flurförderzeug aus.

Von einem hier nicht dargestellten Bedienelement im Bereich des Fahrerplatzes 14 aus wird der Ein- und Ausfahrvorgang der Führung 6 gesteuert. Dadurch ist sichergestellt, dass sich die Bedienperson in einem Bereich befindet, wo sie nicht in Kontakt mit der ausfahrenden Führung 6 kommen kann.

Indem eine Bedienperson einen Ausfahrwunsch signalisiert, wird die Baueinheit 20 aktiviert sowie im Ventilblock 26 die Leitungen 27 zu den Anschlüssen 18b, 19a geöffnet. Die Aufnahmevorrichtung 8 fährt aus bis eine Endposition erreicht ist. Zum Einfahren der Aufnahmevorrichtung 8 wird auf ein entsprechendes Signal hin ebenfalls die Baueinheit 20 aktiviert und im Ventilblock 26 die Leitungen 28 zu den Anschlüssen 18a, 19b geöffnet, bis die Aufnahmevorrichtung 8 ihre Endposition im Flurförderzeug erreicht hat. Durch die Anordnung der Hydraulikzylinder 15a, 15b und der Baueinheit 20 auf dem ersten Teleskopelement 11 sowie die Wirkungsrichtung der Zylinderstangen 17a, 17b kann auf bewegliche hydraulische Anschlüsse verzichtet werden.

Selbstverständlich sind auch andere Ausgestaltungsformen der Erfindung denkbar. So kann beispielsweise die Versorgung der Baueinheit 20 mit elektrischer Energie direkt von der auf der Aufnahmevorrichtung 8 befindlichen Batterie 5 erfolgen. Ebenso kann die Übermittlung von Steuerbefehlen anstelle über eine Kabelverbindung 24 auch mittels drahtloser Datenübertragung erfolgen, so dass keine Kabelverbindung zwischen dem Teleskopelement 11 und dem Rahmen 1 des Flurförderzeugs bestehen muss, was die Fehleranfälligkeit durch Beschädigungen der Kabel 24, 25 reduziert. Zudem ist so eine Fernbedienbarkeit der Entnahmevorrichtung, beispielsweise an einer voll- oder halbautomatischen Entnahmestation gewährleistet.

Anstelle der Anordnung der Hydraulikzylinder 15a, 15b in einem gemeinsamen Gehäuse 16 sind ebenso andere Ausgestaltungsformen denkbar, wie beispielsweise zwei einzeln angeordnete Zylinder. Ebenso können in dem gemeinsamen Gehäuse 16 aber auch Anschlussleitungen oder der Ventilblock 26 enthalten sein, so dass nur eine einzige Hydraulikleitung von der Baueinheit 20 zu dem gemeinsamen Gehäuse 16 vonnöten ist. Der Ventilblock 26 kann andererseits aber auch als Teil der Baueinheit 20 ausgeführt sein. Anstelle einer Baueinheit 20 in der Hydraulikpumpe 22, Hydrauliktank 21 und Elektromotor 23 zusammengefasst sind, können diese Bauteile sowohl einzeln als auch in beliebig zusammengefassten Kombinationen auftreten. Auch eine Regelung der Ausfahrreihenfolge der Hydraulikzylinder 15a, 15b durch entsprechende Gestaltung des Ventilblocks 26 sowie der Leitungen 27, 28 ist denkbar.

## Patentansprüche

1. Flurförderzeug mit einem Fahrzeugrahmen (1), der eine seitliche Entnahmeöffnung für einen Batterieblock (5) aufweist, und einer Vorrichtung zur seitlichen Batterieentnahme, umfassend mindestens eine Batterieaufnahmevorrichtung (8), mindestens eine relativ zum Fahrzeugrahmen bewegliche hydraulische Antriebsvorrichtung und eine Führung (6), wobei die Batterieaufnahmevorrichtung (8) mittels der hydraulischen Antriebsvorrichtung und der Führung (6) zwischen einer Betriebsposition, in der sich die Batterieaufnahmevorrichtung (8) innerhalb des Fahrzeugrahmens (1) befindet, und einer Batteriewechselposition, in der sich die Aufnahmevorrichtung (8) außerhalb des Fahrzeugrahmens (1) befindet, bewegbar ist, **dadurch gekennzeichnet, dass** die Führung (6) als teleskopische Führung ausgebildet ist, die ein mit dem Fahrzeugrahmen (1) verbundenes Grundelement (10), ein an dem Grundelement (10) verschiebbar geführtes erstes Teleskopelement (11) und ein an dem ersten Teleskopelement (11) verschiebbar geführtes zweites Teleskopelement (12) umfasst, wobei die Aufnahmevorrichtung (8) an dem zweiten Teleskopelement (12) befestigt ist und wobei die hydraulische Antriebsvorrichtung mindestens einen Hydraulikzylinder (15a; 15b), vorzugsweise zwei gegenläufig angeordnete doppeltwirkende Hydraulikzylinder (15a, 15b), umfasst, die an dem ersten Teleskopelement (11) angeordnet sind, und annähernd ortsfest zu der relativ zum Fahrzeugrahmen (1) beweglichen hydraulischen Antriebsvorrichtung mindestens eine Vorrichtung (20) zu Bereitstellung hydraulischer Energie für die hydraulische Antriebsvorrichtung an dem ersten Teleskopelement (11) angeordnet ist.

2. Flurförderzeug nach Anspruch 1, **dadurch gekennzeichnet, dass** die Vorrichtung (20) zur Bereitstellung hydraulischer Energie mindestens eine Hydraulikpumpe (22) umfasst.

3. Flurförderzeug nach Anspruch 1 oder 2 **dadurch gekennzeichnet, dass** die Vorrichtung (20) zur Bereitstellung hydraulischer Energie mindestens einen Elektromotor (23) umfasst.

4. Flurförderzeug nach einem der Ansprüche 1 bis 3, **dadurch gekennzeichnet, dass** Vorrichtung (20) zur Bereitstellung hydraulischer Energie mindestens einen Hydrauliktank (21) umfasst.

5. Flurförderzeug nach einem der Ansprüche 1 bis 3, **dadurch gekennzeichnet, dass** Elektromotor (23) und Hydraulikpumpe (22) als Baueinheit ausgebildet sind.

6. Flurförderzeug nach einem der Ansprüche 1 bis 4, **dadurch gekennzeichnet, dass** Hydrauliktank (21) und Hydraulikpumpe (22) als Baueinheit ausgebildet sind.

7. Flurförderzeug nach einem der Ansprüche 1 bis 4, **dadurch gekennzeichnet, dass** Elektromotor (23), Hydrauliktank (21) und Hydraulikpumpe (22) als Baueinheit (20) ausgebildet sind.

8. Flurförderzeug nach einem der Ansprüche 1 bis 7, **dadurch gekennzeichnet**, die Führung (6) als teleskopische Gleitführung ausgebildet ist, wobei das Grundelement (10) der Führung (6) starr mit dem Fahrzeugrahmen (1) verbunden ist, das erste Teleskopelement (11) an dem Grundelement (10) mittels eines ersten Gleitelements bewegbar geführt ist und das zweite Teleskopelement (12) an dem ersten Teleskopelement (11) mittels eines zweiten Gleitelements bewegbar geführt ist und die Aufnahmevorrichtung (8) an dem zweiten Teleskopelement (12) befestigt ist.

## Claims

1. Industrial truck with a vehicle frame (1), which has a lateral removal opening for a battery pack (5), and with a device for lateral battery removal, comprising at least one battery holding device (8), at least one hydraulic drive device, which is capable of being moved relative to the vehicle frame, and a guide (6), the battery holding device (8) being capable of being moved, by means of the hydraulic drive device and the guide (6), between an operating position, in which the battery holding device (8) is located within the vehicle frame (1), and a battery changing position, in which the holding device (8) is located outside of the vehicle frame (1), **characterized in that** the guide (6) is in the form of a telescopic guide, which comprises a basic element (10), which is connected to the vehicle frame (1), a first telescope element (11), which is guided movably on the basic element (10), and a second telescope element (12), which is guided movably on the first telescope element (11), the holding device (8) being fastened on the second telescope element (12), and the hydraulic drive device comprising at least one hydraulic cylinder (15a; 15b), preferably two double-acting hydraulic cylinders (15a, 15b) which are arranged in opposition to one another and are arranged on the first telescope element (11), and at least one device (20) for providing hydraulic energy for the hydraulic drive device being arranged on the first telescope element (11) approximately fixed in position in relation to the hydraulic drive device, which is capable of being moved relative to the vehicle frame (1).

2. Industrial truck according to Claim 1, **characterized in that** the device (20) for providing hydraulic energy comprises at least one hydraulic pump (22).

3. Industrial truck according to Claim 1 or 2, **characterized in that** the device (20) for providing hydraulic energy comprises at least one electric motor (23).

4. Industrial truck according to one of Claims 1 to 3, **characterized in that** the device (20) for providing hydraulic energy comprises at least one hydraulic tank (21).

5. Industrial truck according to one of Claims 1 to 3, **characterized in that** the electric motor (23) and the hydraulic pump (22) are formed as one modular unit.

6. Industrial truck according to one of Claims 1 to 4, **characterized in that** the hydraulic tank (21) and the hydraulic pump (22) are formed as one modular unit.

7. Industrial truck according to one of Claims 1 to 4, **characterized in that** the electric motor (23), the hydraulic tank (21) and the hydraulic pump (22) are formed as one modular unit (20).

8. Industrial truck according to one of Claims 1 to 7, **characterized in that** the guide (6) is in the form of a telescopic sliding guide, the basic element (10) of the guide (6) being connected rigidly to the vehicle frame (1), the first telescope element (11) being guided on the basic element (10) in such a way that it is capable of being moved by means of a first sliding element, and the second telescope element (12) being guided on the first telescope element (11) in such a way that it is capable of being moved by means of a second sliding element, and the holding device (8) being fastened on the second telescope element (12).

## Revendications

1. Chariot de manutention comprenant un châssis de véhicule (1), qui présente une ouverture d'enlèvement latérale pour un bloc batterie (5) et un dispositif pour enlever latéralement la batterie, comprenant au moins un dispositif de réception de batterie (8), au moins un dispositif d'entraînement hydraulique déplaçable par rapport au châssis du véhicule et un guide (6), le dispositif de réception de batterie (8) pouvant être déplacé au moyen du dispositif d'entraînement hydraulique et du guide (6) entre une position de fonctionnement dans laquelle le dispositif de réception de batterie (8) se trouve à l'intérieur du châssis du véhicule (1) et une position de remplacement de batterie dans laquelle le dispositif de réception (8) se trouve en dehors du châssis du véhicule (1), **caractérisé en ce que** le guide (6) est réalisé sous forme de guide télescopique, qui comprend un élément de base (10) connecté au châssis du véhicule (1), un premier élément télescopique (11) guidé de manière déplaçable sur l'élément de base (10) et un deuxième élément télescopique (12) guidé de manière déplaçable sur le premier élément télescopique (11), le dispositif de réception (8) étant fixé sur le deuxième élément télescopique (12) et le dispositif d'entraînement hydraulique comprenant au moins un cylindre hydraulique (15a ; 15b), de préférence deux cylindres hydrauliques (15a, 15b) à double action disposés en sens inverse, qui sont disposés sur le premier élément télescopique (11), et au moins un dispositif (20) est disposé approximativement fixement par rapport au dispositif d'entraînement hydraulique déplaçable par rapport au châssis du véhicule (1) pour fournir de l'énergie hydraulique pour le dispositif d'entraînement hydraulique au premier élément télescopique (11).

2. Chariot de manutention selon la revendication 1, **caractérisé en ce que** le dispositif (20) pour fournir de l'énergie hydraulique comprend au moins une pompe hydraulique (22).

3. Chariot de manutention selon la revendication 1 ou 2, **caractérisé en ce que** le dispositif (20) pour fournir de l'énergie hydraulique comprend au moins un moteur électrique (23).

4. Chariot de manutention selon l'une quelconque des revendications 1 à 3, **caractérisé en ce que** le dispositif (20) pour fournir de l'énergie hydraulique comprend au moins un réservoir hydraulique (21).

5. Chariot de manutention selon l'une quelconque des revendications 1 à 3, **caractérisé en ce que** le moteur électrique (23) et la pompe hydraulique (22) sont réalisés sous forme d'unité constructive.

6. Chariot de manutention selon l'une quelconque des revendications 1 à 4, **caractérisé en ce que** le réservoir hydraulique (21) et la pompe hydraulique (22) sont réalisés sous forme d'unité constructive.

7. Chariot de manutention selon l'une quelconque des revendications 1 à 4, **caractérisé en ce que** le moteur électrique (23), le réservoir hydraulique (21) et la pompe hydraulique (22) sont réalisés sous forme d'unité constructive (20).

8. Chariot de manutention selon l'une quelconque des revendications 1 à 7, **caractérisé en ce que** le guide (6) est réalisé sous forme de guide de glissement télescopique, l'élément de base (10) du guide (6) étant connecté rigidement au châssis du véhicule (1), le premier élément télescopique (11) étant guidé de manière déplaçable sur l'élément de base (10) au moyen d'un premier élément de glissement et le deuxième élément télescopique (12) étant guidé de manière déplaçable sur le premier élément télescopique (11) au moyen d'un deuxième élément de glissement et le dispositif de réception (8) étant fixé sur le deuxième élément télescopique (12).
